# EUROPEAN PATENT SPECIFICATION

(11) **EP 1 230 145 B1**
(45) Date of publication and mention of the grant of the patent: **18.08.2004**
(21) Application number: 00971401.5
(22) Date of filing: 26.10.2000
(51) Int. Cl.: B67D 5/58, B01D 19/00

(54) **COMPACT PUMPING UNIT**
KOMPAKTPUMPE
UNITE DE POMPAGE COMPACTE

(30) Priority: 04.11.1999 IT MI992300
(43) Date of publication of application: 14.08.2002
(73) Proprietor: Nuovo Pignone Holding S.P.A., 50127 Firenze (IT)
(72) Inventor: OLCESE, Stefano, I-21047 Saronno (IT); CATTANEO, Ruben, I-23017 Morbegno (IT)
(74) Representative: Pedder, James Cuthbert
(86) International application number: PCT/EP2000/010681
(87) International publication number: WO 2001/036318

(56) References cited:
- EP-A- 0 492 400
- EP-A- 0 691 304
- WO-A-96/23724
- WO-A-99/45272
- US-A- 3 715 863

## Description

The invention relates to a compact pumping unit.

In particular reference will be made below to a pumping unit of the type used in fuel supply pumps in roadside filling stations; it is, however, clear that a device similar to that to which the present invention relates may be introduced into installations having characteristics and structure very different from these.

Pumping units which, in typical embodiments, comprise a pump connected to a motor for the operation thereof have been available on the market for some time.

The pump may, of course, be of the most varied kinds and the same may be said of the motor, but reference will be made below to a positive-displacement vane pump connected to an electric motor.

Associated with these two basic elements the pumping units always comprise a series of accessory elements suitable for ensuring reliability and safety and for enabling them to be used simply.

To this end each pumping unit is provided with a non-return valve and a filter at the intake, and with a further non-return valve combined with a maximum pressure safety valve at the delivery side.

Furthermore, the pumping units used for fuel supply pumps are generally equipped with a degasifier, a by-pass and a valve which stops supply.

The degasifier separates the air and the gases from the liquid phase and expels them from a secondary circuit of the pumping unit, so as to obtain only liquid at the delivery side of the unit.

The by-pass enables at least a part of pressurized liquid to be diverted again to the intake of the pump, so as to limit and control the pressure, and consequently the output, to the delivery side of the said pump.

The supply stop valve intervenes when high percentages of air are present in the circuit of the pumping unit, causing all the mixture of liquid and air to recirculate inside the said unit. Pumping units having the features of the preamble of claim 1 are known, for example, from WO 99/45272, US 3715863, EP 492400 or WO 96/23724

However, such conventional pumping units are very complex. In particular this is due to all the various accessory elements which accompany the pump and the motor and which contribute towards producing a unit which functions correctly. In fact, all the valves and the elements to which reference has been made are each housed individually inside or sometimes also outside the body of the unit. This makes the disassembly and subsequent assembly of the unit difficult, impedes its maintenance and accessibility to its internal elements. There is therefore a need to simplify the structure of the conventional pumping units, rendering them, moreover, more responsive to the expectations of the operators in the sector.

The object of the present invention is therefore to remedy the technical disadvantages which are a source of complaints, by producing a compact pumping unit which has a substantially simple structure.

Another object of the invention is to produce a pumping unit which may be disassembled and subsequently assembled in a simple and rapid manner.

A further object of the invention is to produce a pumping unit which simplifies the maintenance operations, rendering them simpler and quicker compared with what is necessary when using the conventional technical solutions.

An object of the invention is also that of producing a pumping unit which permits optimum accessibility to its internal elements.

Not the least object of the invention is that of producing a compact pumping unit which is substantially safe and reliable.

These and further objects, according to the present invention, are achieved by producing a compact pumping unit according to claim 1.

Further features of the present invention are defined, furthermore, in the subsequent claims.

In particular, in a preferred embodiment of the pumping unit according to the invention, between the first chamber and the recirculation chamber is located a valve, the intervention of which enables all the liquid processed by the pump to be recirculated inside the pumping unit.

In a further preferred embodiment the pumping unit comprises a safety valve, interposed between the first chamber and the delivery chamber, suitable for preventing the pressure in the delivery chamber from reaching and exceeding a safety limit value.

Advantageously, the compact pumping unit according to the present invention has very limited dimensions in relation to its high qualities of accessibility to the internal elements. This renders it particularly suitable for being used whenever limited dimensions are required, but it is not suited to limiting or impeding the possibilities of intervention thereon.

Further features and advantages of a compact pumping unit according to the present invention will emerge more clearly from the description which follows, given by way of non-exhaustive example, with reference to the accompanying diagrammatic drawings in which:

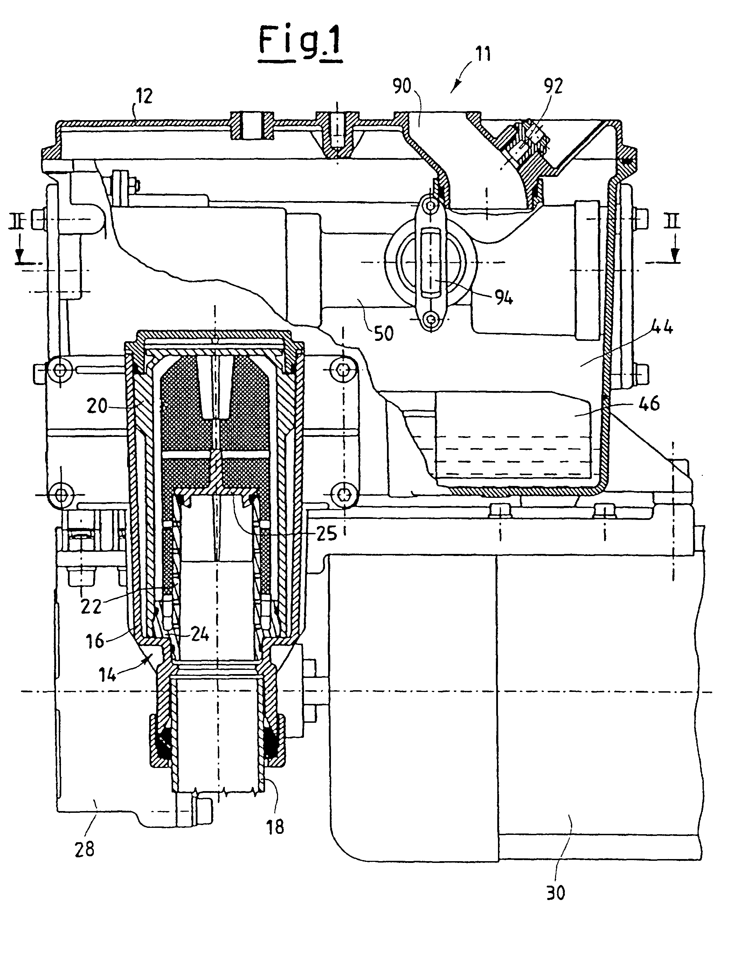

Figure 1 shows a frontal elevation of the pumping unit according to the present invention, partially cutaway;
Figure 2 shows a cross-section through II-II of Fig. 1;

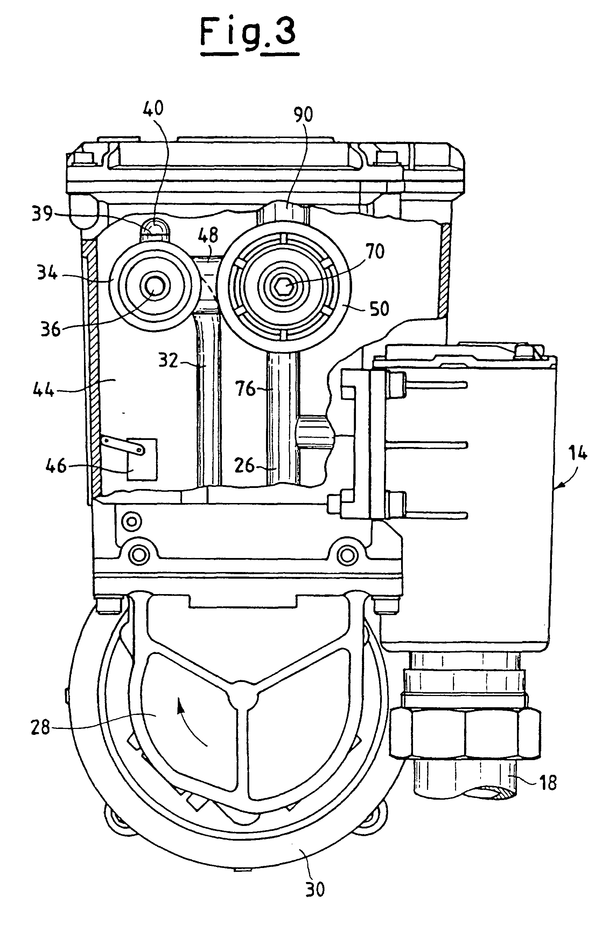

Figure 3 shows a lateral elevation, partially cutaway, of the pumping unit shown in Fig. 1; and

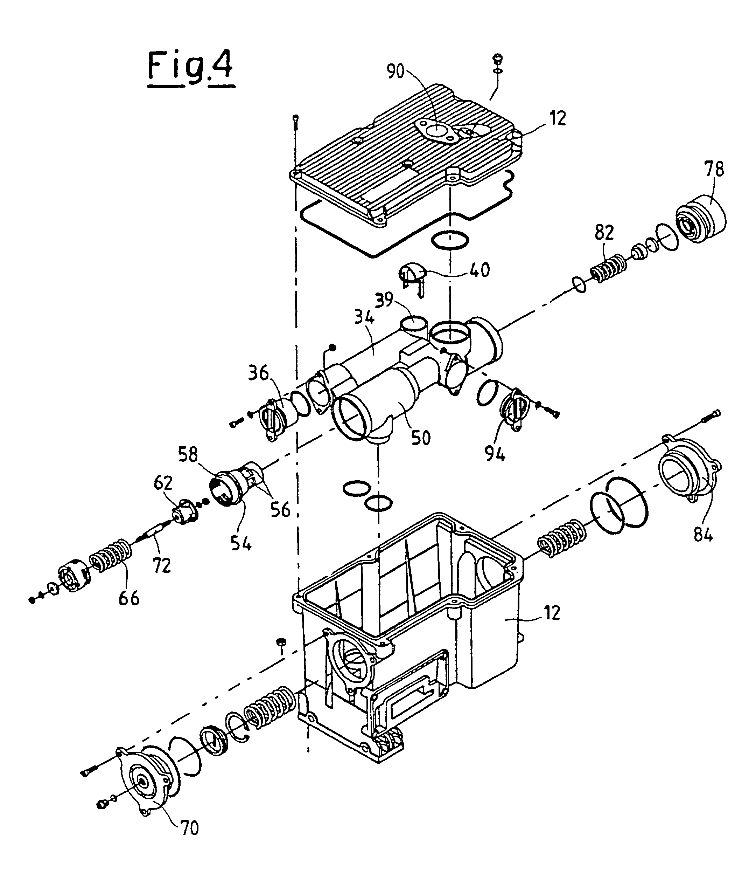

Figure 4 shows an exploded view of a body of the assembly unit and the elements which are housed inside it.

With reference to the quoted drawings, a compact pumping unit denoted in its entirety by the reference numeral 11 is shown.

The pumping unit 11 comprises a body 12 of aluminium or other metallic material, to which is connected a filter unit 14 equipped with non-return valve.

The unit 14 is produced by means of a filter body 16, closed by means of a cap, which has a threaded end with sleeve for the connection with the aid of a threaded ring of a supply tube 18, while an opposite end is flanged and is connected to the body 12 by means of screws.

Inside the filter body 16 is contained a filter 20 which is inserted on a seat 22 of a non-return valve and is fixed thereto by means of a bayonet connection 24.

An obturator 25 produced by means of a plate element supplied with four guide fins slides inside the seat 22.

The filter is in communication with a mouth of an intake pipe 26 of a pump 28 of the pumping unit 11.

The pump 28 is of the rotary positive-displacement self-priming vane type and is operated in rotation by an electric motor 30.

In its turn the pump 28 supplies a delivery pipe 32 which supplies a degasifier. The degasifier is constituted by a sleeve 34 having an end closed by a cap 36 and a second end which is also closed. A first end of a second sleeve 38 is fixed by means of a flange inside the sleeve 34 and in proximity to its second end. The sleeve 38 is coaxial to the sleeve 34, is spaced apart from it and has an open free end while the first end is in the shape of a convergent cone and opens at a through hole 39 of the sleeve 34 for the venting of vapours or gases.

On the hole 39 is located a protection element 40 which prevents the flow of air/liquid mixture which emerges from the sleeve 34 through the hole 39 from passing directly towards the upper part of the body 12. This liquid collects inside a collecting tank 44 provided with discharge valve controlled by a float 46, so that when the liquid collected in the tank 44 reaches a certain level it is autonomously conveyed into the intake of the pump by the opening of the float valve 46.

Through an intermediate portion 48 the sleeve 34 is connected to a second shaped sleeve 50, having an axis substantially parallel to that of the sleeve 34.

Furthermore, at one of its ends the sleeve 50 is integral with the sleeve 34 through the pipe 32, so as to render the structure of the unit constituted by the sleeves 34 and 50 rigid.

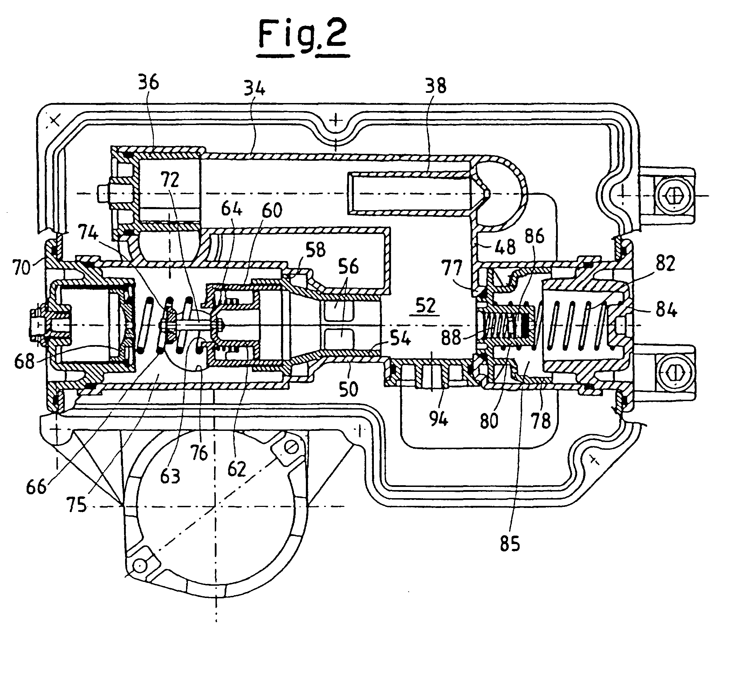

The sleeve 50 determines a chamber 52 connected on one side (on the left in Fig. 2) to a by-pass valve, combined with a valve which stops the supply of liquid when the pressure in chamber 52 drops below a pre-set value. On the other side (on the right in Fig. 2), however, the chamber 52 is connected to a non-return valve combined with a safety valve against excessive pressures, through which a delivery pipe of the pumping unit 11 is supplied. These valves are all contained inside the sleeve 50.

The by-pass valve comprises a body 54 having a portion with sleeve and provided with windows 56 which fits and slides on a portion of the sleeve 50 which opens in the chamber 52.

A second portion of the body 54 is also sleeved with a diameter greater than the first portion, and is provided with a projecting edge 58 fitting a further portion of the sleeve 50 of enlarged diameter with respect to the portion in which the first portion of the valve body 54 is inserted. The second sleeved portion of the body 54 is threaded internally and therein is locked a bush 60 in the inside of which a locking obturator 62 slides. The bush 60 is provided with an annular edge, projecting towards its own interior, which determines an opening 63. Against this projecting edge and inside the bush 60 is located a spring 64 in opposition to the obturator 62, while against the said edge but outside it is located another spring 66 locked from the other side by a threaded plate 68 screwed in a cap 70 which closes the end of the sleeve 50 and is fixed to the body 12.

On the obturator 62, in particular along one of its longitudinal axes, is fixed a pin 72 which is provided with a plate 74 at the other free end. The bush 60 with the obturator 62 and the plate 74 constitute the liquid supply stop valve.

A recirculation pipe 76 connected to the intake of the pump 28 opens into a recirculation chamber 75, determined by a portion of the sleeve 50 contained between the cap 70 and the body 54 of the by-pass valve. In the present embodiment the recirculation pipe 76 is connected to the intake pipe 26.

On the other side of the chamber 52 the sleeve 50 has a seat 77 against which a check obturator 78 of the non-return valve strikes. The obturator 78 has a central portion 80 in the shape of a cylinder, with a base provided with a central through hole. A spring 82 which is locked by a cap 84 is inserted on the portion 80. This cap, in a manner similar to the cap 70, closes the sleeve 50 and is fixed to the body 12.

The interior of the portion 80 contains the safety valve which prevents the pressure in a delivery chamber 85, determined by a portion of the sleeve 50 contained between the seat 77 and the cap 84, from reaching and exceeding a safety limit value due to thermal expansion.

This valve is composed of a disk 86 pressed against the base of the portion 80 by a spring 88 locked by means of a snap ring.

An outlet pipe 90 from the pumping unit 11 according to the invention leads from the chamber 85.

Measuring instruments 92 constituted by a pressure gauge for example are located on this pipe 90.

The unit constituted by the sleeves 34 and 50 is provided with numerous apertures which are closed by caps when the unit is used. In fact, in addition to the caps 36, 70, 84, at the chamber 52 the sleeve 50 has an aperture which permits inspection thereof and is closed by a further cap 94.

The operation of the compact pumping unit according to the invention is substantially as follows.

The pumping unit 11 is particularly indicated for being used in fuel pump filling stations and reference will therefore be made below to its operation when used in such an application.

In such applications the pumping unit 11 is connected, through the tube 18, to a fuel tank (not shown) from which the fuel is taken to be supplied by means of a supply nozzle (not shown). The supply nozzle is connected to the outlet pipe 90 through a hydraulic circuit, the last element of which is a flexible tube (not shown).

When the motor 30 is off the pump does not take in liquid from the tube 18 and the liquid contained inside the unit 11 is at atmospheric pressure.

In particular, at atmospheric pressure is the liquid contained in the chamber 52 which does not succeed in overcoming the force exerted by the spring 82 against the obturator 78. The obturator 78, therefore, separates the chamber 85 from the chamber 52 and prevents the hydraulic circuit downstream of the pumping unit 11 from emptying. At the same time the disk 86 may move, overcoming the elastic force of the spring 88, if the volume of the liquid trapped in the chamber 85 should increase, as a result of a temperature rise for example. In this way the integrity of the components is preserved following events of an unexpected and unforeseen nature.

Following the establishment of the atmospheric pressure in the chamber 52, the body 54 of the by-pass valve is in the closure position with the slits obscured by the sleeve 50 and, at the same time, the spring 64 pressing against the obturator 62 causes the plate 74 to close the opening 63 of the annular edge of the bush 60. In this case also, any passage of liquid is prevented and it therefore remains trapped in the chamber 52.

When the motor is on the liquid is drawn from the tank and, passing through the filter unit with non-return valve 14, enters the intake pipe 26 from which it enters the pump 28 and, after having been dealt with thereby, passes through the delivery pipe 32 into the sleeve 34 of the degasifier where the gases and vapours are separated from the liquid and are expelled mixed with a liquid fraction through the through hole 39. The liquid fraction of the mixture collects, therefore, inside the tank 44. From the sleeve 34 the liquid passes into the chamber 52 through the intermediate portion 48.

When the motor 30 is on but the fuel supply nozzle is closed (i.e. it is not delivering), the pressure in chamber 52 increases but it not able to open the obturator 78. In fact, since the nozzle is closed, the pressure in the chamber 85 balances the pressure in the chamber 52. The pressure in chamber 52, however, overcomes the elastic force of the spring 66 and causes the body 54 of the by-pass valve to move, carrying the windows 56 so that they are at the portion of the sleeve 50 of enlarged diameter. At the same time the obturator 62 is pushed against the annular edge of the bush 60 and closes the opening 63 thereof. In this situation the liquid may pass from the chamber 52 through the windows 56 and thus enter the chamber 75 from which it passes into the recirculation pipe 76 and is recirculated entirely.

When the motor 30 is on and the fuel supply nozzle is open (i.e. it is delivering), the pressure in the chamber 52 overcomes the elastic force of the spring 82 and causes the obturator 78 to move. The liquid enters the chamber 85 from where it passes into the outlet pipe 90. In contrast, the body 54 of the by-pass valve remains in the rest position, with the windows 56 obscured by the sleeve 50, and the obturator 62 moves towards the annular edge of the bush 60 to close the opening 63 thereof.

When the motor 30 is on and the fuel supply nozzle is open, but a large quantity of air is taken in, the pressure in the chamber 52 drops with respect to the conditions of normal operation; this causes the obturator 78 to move towards the seat 77 and the check they represent to close as a consequence. On the other hand, while the body 54 of the by-pass valve remains in the rest position with the windows 56 obscured by the sleeve 50, the obturator 62 moves, actuated by the spring 64, and opens the opening 63. The mixture composed of the liquid containing a high percentage of gases or vapours thus passes between the edges of the obturator 62 and the bush 60 and enters the chamber 75 from which the mixture passes into the recirculation pipe 76 and is recirculated in full. In this situation, on the basis of the above, the supply of fuel is automatically arrested.

As is evident from the description, the pumping unit 11 according to the invention has the valves and the accessory devices of the unit housed in the unit constituted by the sleeves 34 and 50.

In practice the compact pumping unit according to the invention has been found to be particularly advantageous because it has a very simple structure which, moreover, confers high accessibility to its internal elements. This proves useful in particular when maintenance and/or parts replacement operations need to be carried out.

## Claims

1. Compact pumping unit (11) comprising at least one pump (28) which can be operated by means of at least one motor (30), said pump (28) being capable of being supplied with a liquid through at least one intake pipe (26), said liquid, after having been dealt with by said pump (28) being conveyed to a degasifier (34, 38) through at least one delivery pipe (32), said degasifier (34, 38) supplying a first chamber (52) which is connected to a delivery chamber (85), from which an outlet pipe (90) from said pumping unit (11) leads, through at least one non-return valve (78, 82), furthermore, said first chamber (52) being connected to a recirculation chamber (75), from which leads at least one recirculation pipe (76) connected to the intake of said pump (28), through at least one by-pass valve (54, 56), wherein said degasifier (34, 38), said non-return valve (78, 82) and said by-pass valve (54, 56) are all contained in a unit (34, 50) which determines, furthermore, said first chamber (52), said delivery chamber (85) and said recirculation chamber (75), said unit (34, 50) being housed inside a body (12) of said pumping unit (11), with which body (12) said pump (28) and said motor (30) are also associated, said degasifier (34, 38) being constituted by a first sleeve (34) having a closed end and a second end also closed, at least one second sleeve (38), coaxial to said first sleeve (34) and spaced apart from it being fixed inside said first sleeve (34) and in proximity to said second end, a first end of said second sleeve (38) being in the shape of a convergent cone which opens at a through hole (39) of said first sleeve (34) for the venting of vapours or gases, a free end of said second sleeve (38), however, being open, **characterized in that** a liquid fraction of a mixture discharged through said through venting hole (39) collects inside a collecting tank (44) provided with at least one discharge valve controlled by a float (46), said discharge valve conveying part of the liquid collected inside said collecting tank (44) to the intake of the pump in case of said liquid reaching a pre-set level

2. Pumping unit (11) according to Claim 1, **characterized in that** a filter unit (14) equipped with non-return valve is connected to said body (12), said filter unit (14) being in communication with a mouth of said intake pipe (26) of said pump (28) of said pumping unit (11).

3. Pumping unit (11) according to Claim 1, **characterized in that** said unit (34, 50) is constituted by said first sleeve (34) connected, through at least one intermediate portion (48), to a third shaped sleeve (50) having an axis substantially parallel to that of said first sleeve (34).

4. Pumping unit (11) according to Claim 3, **characterized in that** an end of said third sleeve (50) is integral with said first sleeve (34) through said delivery pipe (32).

5. Pumping unit (11) according to Claim 4, **characterized in that** said by-pass valve (54, 56) comprises a valve body (54) having at least one sleeved portion provided with windows (56), which fits and slides on a portion of said third sleeve (50) which opens in said first chamber (52), said valve body (54) being movable in opposition and by the action of a spring (66).

6. Pumping unit (11) according to Claim 5, **characterized in that** said valve body (54) of said by-pass valve (54, 56) comprises at least one second sleeved portion, with a diameter greater than that of said first portion, said second portion being provided with a projecting edge (58) fitting a further portion of said third sleeve (50) having an enlarged diameter with respect to the portion in which said first portion of said valve body (54) is inserted.

7. Pumping unit (11) according to Claim 1, **characterized in that** a liquid supply stop valve (62, 74) is located between said first chamber (52) and said recirculation chamber (75).

8. Pumping unit (11) according to Claim 5 and 7, **characterized in that** said liquid supply stop valve (62, 74) comprises a bush (60) integral with said valve body (54) of said by-pass valve (54, 56), said bush (60) being provided with a substantially annular edge projecting towards the inside which determines an opening (63), sliding in said bush (60) being a locking obturator (62) in opposition and by the action of a spring (64) interposed between said locking obturator (62) and said annular edge of said bush (60), furthermore, there being fixed to said locking obturator (62) a pin (72) which projects outside said bush (60) and is provided at its own free end with a plate (74), so that both the locking obturator (62) and said plate (74) may close said opening (63) according to the operating conditions of said pumping unit (11).

9. Pumping unit (11) according to Claim 1, **characterized in that** said non-return valve (78, 82) comprises at least one seat (77) against which strikes a check obturator (78) movable in opposition and by the action of a spring (82).

10. Pumping unit (11) according to Claim 9, **characterized in that** it comprises a safety valve (86, 88) interposed between said first chamber (52) and said delivery chamber (85), said safety valve (86, 88) being suitable for preventing the pressure in said delivery chamber (85) from reaching and exceeding a safety limit value.

11. Pumping unit (11) according to Claim 10, **characterized in that** said safety valve (86, 88) comprises a central portion (80) of said check obturator (78) in the shape of a cylinder with a base provided with a through hole, sliding in said central portion (80) there being a disk (86) pressed against said base of said central portion (80) by a spring (88).

12. Pumping unit (11) according to Claim 1, **characterized in that** said unit (34, 50) is provided with apertures closed by caps (36, 70, 84, 94).

## Patentansprüche

1. Kompakte Pumpeinheit (11) enthaltend wenigstens eine Pumpe (28), die durch wenigstens einen Motor (30) betätigt werden kann, wobei die Pumpe (28) in der Lage ist, mit einer Flüssigkeit durch wenigstens eine Einlassleitung (26) versorgt zu werden, wobei die Flüssigkeit, nachdem sie von der Pumpe (28) bearbeitet worden ist, zu einem Entgaser (34, 38) durch wenigstens eine Versorgungsleitung (32) transportiert wird, wobei der Entgaser (34, 38) eine erste Kammer (52) versorgt, die mit einer Versorgungskammer (85) verbunden ist, aus der eine Ausgangsleitung (90) aus der Pumpeinheit (11) durch wenigstens ein Ventil (78,82) ohne Rückkehr herausführt, wobei ferner die erste Kammer (52) mit einer Rezirkulationskammer (75) verbunden ist, von der wenigstens eine Rezirkulationsleiting (76) wegführt, die mit dem Einlass der Pumpe (28) über wenigstens ein Bypass-Ventil (54, 56) verbunden ist, wobei der Entgaser (34,38), das Ventil (78,82) ohne Rückkehr und das Bypass-Ventil (54,56) alle in einer Einheit (34,50) enthalten sind, die ferner die erste Kammer (52), die Versorgungskammer (85) und die Rezirkulationskammer (75) bestimmt, wobei die Einheit (34, 50) innerhalb eines Körpers (12) der Pumpeinheit (11) untergebracht ist, der der Körper (12), die Pumpe (28) und der Motor (30) ebenfalls zugeordnet sind, wobei der Entgaser (34, 38) durch eine erste Hülse (34), die ein geschlossenes Ende und ein zweites, ebenfalls geschlossenes Ende hat, wenigstrens eine zweite Hülse (38), die koaxial mit der ersten Hülse (34) ist und im Abstand von ihr ist und innerhalb der ersten Hülse (34) und nahe dem zweiten Ende befestigt ist, wobei ein erstes Ende der zweiten Hülse (38) die Form von einem konvergierenden Kegel hat, der sich an einem Durchgangsloch (39) der ersten Hülse (34) öffnet zur Abgabe von Dämpfen oder Gasen, wobei ein freies Ende der zweiten Hülse jedoch offen ist, **dadurch gekennzeichnet, dass** sich ein flüssiger Anteil eines Gemisches, das durch das Abzugsloch (39) abgegeben wird, innerhalb eines Sammeltankes (44) sammelt, der mit wenigstens einem Ausströmungsventil versehen ist, das durch einen Schwimmer (46) gesteuert ist, wobei das Ausströmungsventil einen Teil der innerhalb des Sammeltanks (44) gesammelten Flüssigkeit zum Einlass der Pumpe transportiert, falls die Flüssigkeit einen im voraus eingestellten Pegel erreicht.

2. Pumpeinheit (11) nach Anspruch 1, **dadurch gekennzeichnet, dass** eine Filtereinheit (14), die mit einem Ventil ohne Rückkehr ausgerüstet ist, mit dem Körper (12) verbunden ist, wobei die Filtereinheit (14) mit einer Öffnung der Einlassleitung (26) der Pumpe (28) der Pumpeinheit (11) in Verbindung steht.

3. Pumpeinheit (11) nach Anspruch 1, **dadurch gekennzeichnet, dass** die Einheit (34, 50) durch die erste Hülse (34) gebildet ist, die durch wenigstens einen Zwischenabschnitt (48) mit einer dritten geformten Hülse (50) verbunden ist, die eine Achse im wesentlichen parallel zu derjenigen der ersten Hülse (34) hat.

4. Pumpeinheit (11) nach Anspruch 3, **dadurch gekennzeichnet, dass** ein Ende der dritten Hülse (50) durch die Versorgungsleitung (32) einstückig mit der ersten Hülse (34) ist.

5. Pumpeinheit (11) nach Anspruch 4, **dadurch gekennzeichnet, dass** das Bypass-Ventil (54, 56) einen Ventilkörper (54) aufweist, der wenigstens einen mit einer Hülse versehenen Abschnitt hat, der mit Fenstern (56) versehen ist und der auf einen Abschnitt der dritten Hülse (50) passt und auf diesem gleitet, der sich in die erste Kammer (52) öffnet, wobei der Ventilkörper (54) entgegengesetzt und durch die Wirkung einer Feder (66) bewegbar ist.

6. Pumpeinheit (11) nach Anspruch 5, **dadurch gekennzeichnet, dass** der Ventilkörper (54) des Bypass-Ventils (54, 56) wenigstens einen zweiten mit einer Hülse versehenen Abschnitt mit einem Durchmesser aufweist, der grösser als derjenige des ersten Abschnittes ist, wobei der zweite Abschnitt mit einem vorstehenden Rand versehen ist, der mit einem weiteren Abschnitt der dritten Hülse (50) zusammen passt, der einen vergrösserten Durchmesser in bezug auf den Abschnitt hat, in den der erste Abschnitt des Ventilkörpers (54) eingesetzt ist.

7. Pumpeinheit (11) nach Anspruch 1, **dadurch gekennzeichnet, dass** ein Flüssigkeitsversorgungs-Sperrventil (62, 74) zwischen der ersten Kammer (52) und der Rezirkulationskammer (75) angeordnet ist.

8. Pumpeinheit (11) nach Anspruch 5 und 7, **dadurch gekennzeichnet, dass** das Flüssigkeitsversorgungs-Sperrventil (62, 74) eine Buchse (60) einstückig mit dem Ventilkörper (54) des Bypass-Ventiles (54, 56) aufweist, wobei die Buchse (60) mit einem im wesentlichen ringförmigen Rand versehen ist, der in Richtung auf die Innenseite vorsteht und eine Öffnung (63) bestimmt, wobei in der Buchse (60) eine verriegelnde Verschlußvorrichtung (62) entgegengesetzt und durch die Wirkung einer Feder (64) verschiebbar ist, die zwischen der verriegelnden Verschlußvorrichtung (62) und dem ringförmigen Rand der Buchse (60) angeordnet ist, wobei ferner an der verriegelnden Verschlußvorrichtung (62) ein Stift (72) befestigt ist, der von der Buchse (60) nach aussen vorsteht und an seinem eigenen freien Ende mit einer Platte (74) derart versehen ist, dass sowohl die verriegelnde Verschlußvorrichtung (62) als auch die Platte (74) die Öffnung (63) gemäss den Betriebsbedingungen der Pumpeinheit (11) schließen können.

9. Pumpeinheit (11) nach Anspruch 1, **dadurch gekennzeichnet, dass** das Ventil (78, 82) ohne Rückkehr wenigstens einen Sitz (77) aufweist, gegen den eine Prüf-Verschlussvorrichtung (78) schlägt, die entgegengesetzt und durch die Wirkung einer Feder (82) bewegbar ist.

10. Pumpeinheit (11) nach Anspruch 9, **dadurch gekennzeichnet, dass** sie ein Sicherheitsventil (86, 88) aufweist, das zwischen der ersten Kammer (52) und der Versorgungskammer (85) angeordnet ist, wobei das Sicherheitsventil (86, 88) geeignet ist zu verhindern, dass der Druck in der Versorgungskammer (85) einen Sicherheits-Grenzwert erreicht und überschreitet.

11. Pumpeinheit (11) nach Anspruch 10, **dadurch gekennzeichnet, dass** das Sicherheitsventil (86, 88) einen Mittelabschnitt (80) der Prüf-Verschlussvorrichtung (78) in der Form von einem Zylinder mit einer Basis aufweist, die mit einem Durchgangsloch versehen ist, wobei in dem Mittelabschnitt (80) eine Scheibe (86) verschiebbar ist, die durch eine Feder (88) gegen die Basis des Mittelabschnittes (80) gepresst ist.

12. Pumpeinheit (11) nach Anspruch 1, **dadurch gekennzeichnet, dass** die Einheit (34, 50) mit Öffnungen versehen ist, die durch Kappen (36, 70, 84, 94) geschlossen sind.

## Revendications

1. Unité de pompage compacte (11) comprenant au moins une pompe (28) qui peut être actionnée au moyen d'au moins un moteur (30), ladite pompe (28) pouvant recevoir un liquide par au moins un tuyau d'admission (26), ledit liquide, après avoir été traité par ladite pompe (28), étant envoyé à un dégazeur (34, 38) via au moins un tuyau de distribution (32), ledit dégazeur (34, 38) alimentant une première chambre (52) qui est reliée à une chambre de distribution (85), de laquelle part un tuyau de sortie (90) de ladite unité de pompage (11), en passant par au moins un clapet anti-retour (78, 82), ladite première chambre (52) étant en outre connectée à une chambre de recirculation (75), de laquelle part au moins un tuyau de recirculation (76) relié à l'entrée de ladite pompe (28), via au moins une vanne de dérivation (54, 56), où ledit dégazeur (34, 38), ledit clapet anti-retour (78, 82) et ladite vanne de dérivation (54, 56) sont tous contenus dans une unité (34, 50) qui détermine en outre ladite première chambre (52), ladite chambre de distribution (85) et ladite chambre de recirculation (75), ladite unité (34, 50) étant logée à l'intérieur d'un corps (12) de ladite unité de pompage (11), auquel corps (12) ladite pompe (28) et ledit moteur (30) sont aussi associés, ledit dégazeur (34, 38) étant constitué d'un premier manchon (34) ayant une extrémité fermée et une deuxième extrémité également fermée, au moins un deuxième manchon (38), coaxial audit premier manchon (34) et espacé par rapport à celui-ci, et fixé à l'intérieur dudit premier manchon (34) et à proximité de ladite deuxième extrémité, une première extrémité dudit deuxième manchon (38) ayant la forme d'un cône divergent qui débouche au niveau d'un trou traversant (39) dudit premier manchon (34) pour la ventilation des vapeurs ou des gaz, une extrémité libre dudit deuxième manchon (38) étant toutefois ouverte, **caractérisée en ce qu'**une fraction liquide d'un mélange déchargé à travers ledit trou traversant de ventilation (39) s'accumule à l'intérieur d'un réservoir collecteur (44) pourvu d'au moins une soupape de décharge commandée par un flotteur (46), ladite soupape de décharge envoyant une partie du liquide recueilli à l'intérieur dudit réservoir collecteur (44) à l'entrée de la pompe dans le cas où ledit liquide atteint un niveau prédéterminé.

2. Unité de pompage (11) selon la revendication 1, **caractérisée en ce qu'**une unité filtrante (14) munie d'un clapet anti-retour est connectée audit corps (12), ladite unité filtrante (14) étant en communication avec une bouche dudit tuyau d'admission (26) de ladite pompe (28) de ladite unité de pompage (11).

3. Unité de pompage (11) selon la revendication 1, **caractérisée en ce que** ladite unité (34, 50) est constituée dudit premier manchon (34) connecté, via au moins une partie intermédiaire (48), à un troisième manchon formé (50) ayant un axe sensiblement parallèle à celui dudit premier manchon (34).

4. Unité de pompage (11) selon la revendication 3, **caractérisée en ce qu'**une extrémité dudit troisième manchon (50) est intégrée audit premier manchon (34) via ledit tuyau de distribution (32).

5. Unité de pompage (11) selon la revendication 4, **caractérisée en ce que** ladite vanne de dérivation (54, 56) comprend un corps de vanne (54) ayant au moins une partie à manchon munie de lumières (56), qui se monte et coulisse sur une partie dudit troisième manchon (50) qui débouche dans ladite première chambre (52), ledit corps de vanne (54) étant mobile en opposition et par l'action d'un ressort (66).

6. Unité de pompage (11) selon la revendication 5, **caractérisée en ce que** ledit corps de vanne (54) de ladite vanne de dérivation (54, 56) comprend au moins une deuxième partie à manchon, avec un diamètre supérieur à celui de ladite première partie, ladite deuxième partie étant munie d'un bord saillant (58) qui reçoit une partie supplémentaire dudit troisième manchon (50) ayant un diamètre agrandi par rapport à la partie dans laquelle ladite première partie dudit corps de vanne (54) est insérée.

7. Unité de pompage (11) selon la revendication 1, **caractérisée en ce qu'**une vanne d'arrêt (62, 74) d'alimentation en liquide est située entre ladite première chambre (52) et ladite chambre de recirculation (75).

8. Unité de pompage (11) selon les revendications 5 et 7, **caractérisée en ce que** ladite vanne d'arrêt (62, 74) d'alimentation en liquide comprend une douille (60) intégrée audit corps de vanne (54) de ladite vanne de dérivation (54, 56), ladite douille (60) étant pourvue d'un bord sensiblement annulaire qui fait saillie vers l'intérieur qui détermine une ouverture (63), un obturateur de blocage (62) coulissant dans ladite douille (60) en opposition et par l'action d'un ressort (64) intercalé entre ledit obturateur de blocage (62) et ledit bord annulaire de ladite douille (60), un axe (72) étant en outre fixé audit obturateur de blocage (62), ledit axe faisant saillie à l'extérieur de ladite douille (60) et étant muni d'une plaque (74) à son extrémité libre, de sorte que à la fois l'obturateur de blocage (62) et ladite plaque (74) peuvent fermer ladite ouverture (63) en fonction des conditions de marche de ladite unité de pompage (11).

9. Unité de pompage (11) selon la revendication 1, **caractérisée en ce que** ledit clapet anti-retour (78, 82) comprend au moins un siège (77) que vient heurter un obturateur de retenue (78) mobile en opposition et par l'action d'un ressort (82).

10. Unité de pompage (11) selon la revendication 9, **caractérisée en ce qu'**elle comprend une vanne de sécurité (86, 88) intercalée entre ladite première chambre (52) et ladite chambre de distribution (85), ladite vanne de sécurité (86, 88) étant adaptée pour empêcher la pression régnant dans ladite chambre de distribution (85) d'atteindre et de dépasser une valeur limite de sécurité.

11. Unité de pompage (11) selon la revendication 10, **caractérisée en ce que** ladite vanne de sécurité (86, 88) comprend une partie centrale (80) dudit obturateur de retenue (78) sous la forme d'un cylindre comportant une base munie d'un trou traversant, un disque (86), pressé contre ladite base de ladite partie centrale (80) par un ressort (88), coulissant dans ladite partie centrale (80).

12. Unité de pompage (11) selon la revendication 1, **caractérisée en ce que** ladite unité (34, 50) est munie d'ouvertures fermées par des bouchons (36, 70, 84, 94).
